# EUROPEAN PATENT APPLICATION

(11) **EP 4 053 938 A1**
(43) Date of publication of application: **07.09.2022**
(21) Application number: 20880677.8
(22) Date of filing: 30.07.2020
(51) Int. Cl.: H01M 4/134, H01M 4/1395, H01M 4/04, H01M 4/62, H01M 10/052

(54) **NEGATIVE ELECTRODE FOR LITHIUM SECONDARY BATTERY, METHOD FOR MANUFACTURING SAME, AND LITHIUM SECONDARY BATTERY USING SAME**

(30) Priority: 31.10.2019 KR 20190138110
(71) Applicant: POSCO, Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: BAE, Hongyoul, Pohang-si, Gyeongsangbuk-do 37673 (KR); KIM, Jin Hong, Pohang-si, Gyeongsangbuk-do 37660 (KR); LEE, Kyung Hwang, Incheon 21994 (KR); YANG, Ji Hoon, Pohang-si, Gyeongsangbuk-do 37673 (KR); JUN, Jae Ho, Pohang-si, Gyeongsangbuk-do 37662 (KR); LEE, Sang Lag, Pohang-si, Gyeongsangbuk-do 37639 (KR); BAE, Weon Soo, Pohang-si, Gyeongsangbuk-do 37677 (KR)
(74) Representative: Potter Clarkson
(86) International application number: PCT/KR2020/010093
(87) International publication number: WO 2021/085809

(57) **Abstract**

The present exemplary embodiments relates to a negative electrode for a lithium secondary battery, a manufacturing method thereof, and a lithium secondary battery comprising the same. An exemplary embodiment may provide a negative electrode for a lithium secondary battery comprising current collector and a negative active material layer positioned on at least one surface of the current collector, and comprising a lithium metal layer, wherein the negative active material layer comprising the lithium metal layer, comprises a coating layer positioned on the current collector and comprising a metal seed, and a lithium metal layer positioned on the coating layer.

## Description

### CROSS-REFERENCE TO RELATED APPLICATION

This application claims priority to and the benefit of Korean Patent Application No. 10-2019-0138110 filed in the Korean Intellectual Property Office on October 31, 2019, the entire contents of which are incorporated herein by reference.

### BACKGROUND OF THE INVENTION

### (a) Field of the Invention

The present exemplary embodiments relate to a negative electrode for a lithium secondary battery, a manufacturing method thereof, and a lithium secondary battery using the same.

### (b) Description of the Related Art

In order to reduce the price and improve the high energy density of the secondary battery, it has been proposed to use a lithium metal negative electrode as the negative electrode of the lithium secondary battery.

In order to form such a lithium metal negative electrode, in general, a method of rolling a lithium foil on a current collector is used. However, in the case of rolling, there is a problem in that it is difficult to implement a lithium metal negative electrode having a thickness of 20 *µ*m or less.

On the other hand, in order to implement a secondary battery having a high energy density using a lithium metal negative electrode, a thin lithium metal negative electrode having a thickness of 10 to 20 *µ*m is required. When the thickness of the lithium metal negative electrode is too thin, the cycle-life is sharply reduced due to non-reversible reactions and side reactions in the initial stage of charging and discharging, and if it is too thick, not only the energy density of the battery deteriorates, but also this is because of the amount of lithium metal used increases, and thus it is not economical.

In order to prepare a lithium metal negative electrode having an appropriate thickness, a method for manufacturing a lithium metal negative electrode using an electrochemical method, that is, an electrodeposition method, has been proposed.

As described above, when a low current is applied and electrodeposited in the process of manufacturing a lithium metal negative electrode by the electrodeposition method, the rate of electrodeposition is too slow, and it takes a long time to obtain a lithium metal negative electrode having an appropriate thickness as described above, so it is difficult to commercialize.

In addition, when a high current is applied to increase the rate of electrodeposition, a side reaction caused by an overvoltage in the initial stage of electrodeposition increases, and the protective layer on the surface of the lithium metal negative electrode generated in the electrodeposition process is damaged due to the high current and the resulting high voltage. Accordingly, when such a negative electrode is applied, side reactions become more severe during the charging and discharging process, thereby deteriorating the performance of the lithium secondary battery.

Therefore, there is an urgent need to develop a technology capable of manufacturing a lithium metal negative electrode by an electrodeposition method while manufacturing a negative electrode for a lithium secondary battery having excellent charge and discharge characteristics.

### SUMMARY OF THE INVENTION

In the present exemplary embodiment, a negative electrode for a lithium secondary battery having excellent charge/discharge characteristics even when a high current is applied in the electrodeposition process to manufacture a negative electrode having a negative active material layer comprising a lithium metal layer, a method for manufacturing the same, and a negative electrode for a lithium secondary battery comprising the same.

A negative electrode for a lithium secondary battery according to an exemplary embodiment, may comprise current collector, and a negative active material layer positioned on at least one surface of the current collector, and comprising a lithium metal layer, wherein the negative active material layer comprising the lithium metal layer, may comprise a coating layer positioned on the current collector and comprising a metal seed, and a lithium metal layer positioned on the coating layer.

A negative electrode for a lithium secondary battery according to another exemplary embodiment, may comprise current collector, and a negative active material layer positioned on at least one surface of the current collector, and comprising a lithium metal layer, wherein the negative active material layer comprising the lithium metal layer, may comprise a metal seed therein.

In addition, a method for manufacturing a negative electrode for a lithium secondary battery according to another exemplary embodiment, may comprise forming a coating layer on at least one surface of a current collector using a coating composition comprising a metal seed, positioning the current collector on which the coating layer is formed in a plating solution and then positioning a lithium source at a predetermined distance from the coating layer and forming a lithium metal layer by applying a current between the current collector and the lithium source, wherein the metal seed may be at least one selected from the group consisting of magnesium, silver, zinc, platinum, tin, silicon, aluminum, sodium, potassium, gold, bismuth, indium and germanium.

According to the present exemplary embodiment, even if the negative active material layer is formed by performing the electrodeposition process under high current conditions from the initial stage, excessive lithium particles may be prevented from being nucleated, and the lithium particles having a coarse structure may be grown to form a lithium metal layer comprising the same, and as a result, a negative electrode for a lithium secondary battery in which a negative active material layer having a uniform surface is formed may be manufactured.

In addition, since the negative electrode for a lithium secondary battery manufactured as described above comprises a negative active material layer comprising a metal seed, the charge/discharge characteristics of a lithium secondary battery to which it is applied may be significantly improved.

### BRIEF DESCRIPTION OF THE DRAWINGS

FIG. 1 schematically shows a method for manufacturing a negative electrode for a lithium secondary battery according to an exemplary embodiment and a negative electrode for a lithium secondary battery manufactured according to the method.
FIG. 2 schematically shows a negative electrode for a lithium secondary battery according to another exemplary embodiment.
FIG. 3 is a SEM image showing a cross-section of a current collector having a coating layer formed thereon in the process of manufacturing a negative electrode for a lithium secondary battery according to Example 1.
FIG. 4A and FIG. 4B show the component analysis results of the current collector on which the coating layer is formed in the process of manufacturing the negative electrode for a lithium secondary battery according to Example 1.
FIG. 5 is a result of measuring the surface microstructure of the negative electrode for a lithium secondary battery formed according to the electrodeposition time.
FIG. 6 shows the results of evaluation of the charge/discharge characteristics of the lithium secondary batteries prepared according to Example 1 and Comparative Example 1.
FIG. 7 schematically shows a lithium secondary battery according to an exemplary embodiment.

### DETAILED DESCRIPTION OF THE EMBODIMENTS

Hereinafter, embodiments of the present invention will be described in detail. However, this is provided as an example, and the present invention is not limited thereto, and the present invention is only defined by the scope of the claims to be described later.

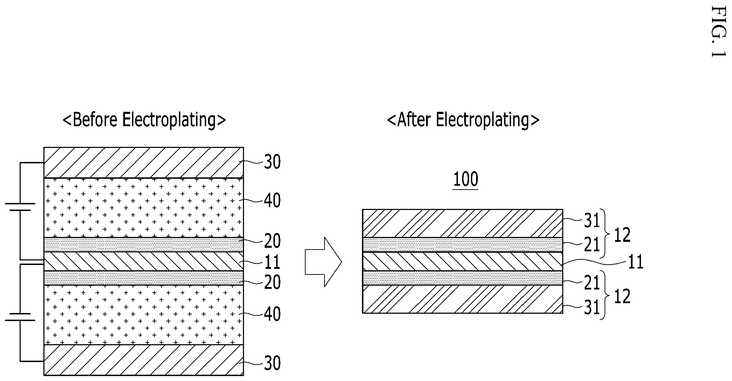

FIG. 1 schematically shows a method for manufacturing a negative electrode for a lithium secondary battery according to an exemplary embodiment and a negative electrode for a lithium secondary battery manufactured accordingly.

Referring to FIG. 1, the negative electrode 100 for a lithium secondary battery according to an exemplary embodiment comprises a negative active material layer 12 positioned on at least one surface of the current collector 11 and the current collector 11.

Current collector 11 is for electrical connection in lithium secondary battery.

The current collector 11 may have the form of a thin film (foil), but is not limited thereto, and for example, a mesh, a foam, a rod, a wire, and a thin sheet in which wire (fiber) is woven.

As a material of the current collector 11, a material having electrical conductivity and limited reaction with lithium may be used. As a material of the current collector 11, for example, any one or a combination of copper, nickel, titanium, stainless steel, gold, platinum, silver, tantalum, ruthenium, and alloys thereof, carbon, a conductive polymer, the composite fibers in which a conductive layer is coated on a non-conductive polymer or a combination thereof may be used.

When the thickness of the current collector 11 is thick, the weight of the battery is increased and the energy density of the battery is lowered, and when the thickness of the current collector 11 is reduced, there is a risk of overheating damage during high current operation, and may be damaged by tension during the battery manufacturing process. Accordingly, the thickness of the current collector 11 may be in the range of 1 *µ*m to 50 *µ*m.

The negative active material layer 12 is positioned on the current collector 11 and comprises a coating layer 21 comprising a metal seed and a lithium metal layer 31 positioned on the coating layer 21.

As described above, when the electrodeposition process is performed by applying a high current in order to increase the rate of electrodeposition for reasons of forming the negative active material layer, there is a problem in that the performance of the lithium secondary battery is deteriorated.

However, when forming the negative active material layer 12 in a structure comprising a coating layer 21 comprising a metal seed as in this exemplary embodiment, even when the electrodeposition process is performed by applying a high current, it is possible to prevent excessive generation of fine lithium particles or damage of the film, which is a surface protective layer of the lithium metal layer already formed in the electrodeposition process.

More specifically, since the negative active material layer of this exemplary embodiment comprises a coating layer comprising a metal seed, when a lithium metal layer is formed on the coating layer by applying a high current in the electrodeposition process, it is possible to induce the initially generated lithium particles to grow well so that particles having a coarse structure are formed, and at the same time, the lithium metal layer and consequently the negative active material layer may have a uniform surface.

Accordingly, the performance of the lithium secondary battery to which the negative electrode according to the present exemplary embodiment is applied, specifically, the charging and discharging characteristics may be significantly improved. In addition, since a negative electrode for a lithium secondary battery having high performance may be manufactured even when the electrodeposition process is performed at a high speed by applying a high current, the productivity of the negative electrode for a lithium secondary battery may be significantly improved.

The metal seed may be, for example, one or more selected from the group consisting of magnesium, silver, zinc, platinum, tin, silicon, aluminum, sodium, potassium, gold, bismuth, indium, and germanium, but is not limited thereto.

In this exemplary embodiment, the coating layer comprises a metal seed. When the coating layer comprises the metal seed as described above, since the coating layer comprises the metal seed having high electron conductivity, electrons are smoothly supplied from the current collector and lithium ions are reduced, so that the electrodeposition of the lithium metal layer is easily performed.

However, when the particles comprised in the coating layer are in the form of metal oxides, when compared to the case comprising metal seeds as in this exemplary embodiment, since electrons are not supplied smoothly from the current collector due to low electron conductivity, the coating layer comprising the metal oxide may rather act as a resistance layer in the electrodeposition process. In this case, there is a problem in that the electrodeposition of the lithium metal layer is not easily performed.

In addition, when the lithium metal layer is formed on the coating layer comprising the metal seed as in this exemplary embodiment, because it may lower the nucleation free energy at the beginning of the nucleation of lithium particles in the electrodeposition process, it is possible to form a lithium metal layer having a coarse particle structure even under high current and overvoltage conditions.

In the negative electrode of the present exemplary embodiment, the thickness of the coating layer may be 0.01 *µ*m to 10 *µ*m, more specifically 100 nm to 500 nm range. If the thickness of the coating layer satisfies the range, uniform electrodeposition of coarse lithium particles is possible, which is an effect obtained by comprising the above-mentioned metal seeds. On the other hand, if the thickness of the coating layer comprising the metal seed is too thin, non-uniform of local coating thickness tends to occur as the coating area expands, and the resultantly generated lithium particle size becomes non-uniform. On the other hand, if the thickness of the coating layer is too thick, there is a problem of causing deterioration of the battery energy density due to an increase in weight and volume. However, the thickness of this coating layer may be variably adjusted according to the design of the lithium secondary battery structure.

The thickness of the negative active material layer 12 may range from 1 *µ*m to 100 *µ*m, more specifically from 5 *µ*m to 30 *µ*m.

If the thickness of the negative active material layer 12 is too thick, when the negative electrode of the present exemplary embodiment is applied to a lithium secondary battery, there is a problem in that the mass and weight of the battery are increased and the energy density is lowered. In addition, since the time and cost of the electrodeposition process increase in proportion to the thickness when forming the negative active material layer 12, the thickness of the negative active material layer 12 is preferably 100 *µ*m or less.

In addition, if the thickness of the negative active material layer 12 is too thin, when the negative electrode of the present exemplary embodiment is applied to a lithium secondary battery, there is a problem that the charge and discharge cycle-life of the battery is deteriorated. Specifically, during charging and discharging of the battery, lithium in the battery is gradually consumed due to a negative reaction between lithium comprised in the negative active material layer and the electrolyte solution, and the battery capacity is reduced. However, if the thickness of the negative active material layer 12 is thin, the amount of lithium that may supplement lithium consumed during charging and discharging decreases, so the charging and discharging cycle-life of the battery deteriorates. Therefore, the thickness of the negative active material layer 12 is preferably 1 *µ*m or more.

On the other hand, although not shown, the negative active material layer of the present exemplary embodiment may further comprise a film positioned on the surface of the negative active material layer.

On the other hand, although not shown, the negative active material layer of the present exemplary embodiment may further comprise a film positioned on the surface of the negative active material layer.

The thickness of the film may be, for example, 2nm to 2*µ*m, more specifically 10nm to 500nm range.

If the thickness of the film positioned on the surface of the negative active material layer 12 is too thick, the lithium ion conductivity will be lowered and the interface resistance will increase, so that the charge and discharge characteristics may deteriorate when applying to a battery. In addition, if the thickness of the film is too thin, the film may be easily lost in the process of applying the lithium metal negative electrode according to the exemplary embodiment to the battery.

Therefore, it is preferable that the film be formed uniformly and densely over the entire surface of the negative active material layer 12 with a thin thickness within a range that satisfies the thickness range.

In this case, the film may comprise at least one material selected from the group consisting of a Li-N-C-H-O-based ionic compound, a Li-P-C-H-O-based ionic compound, and LiF.

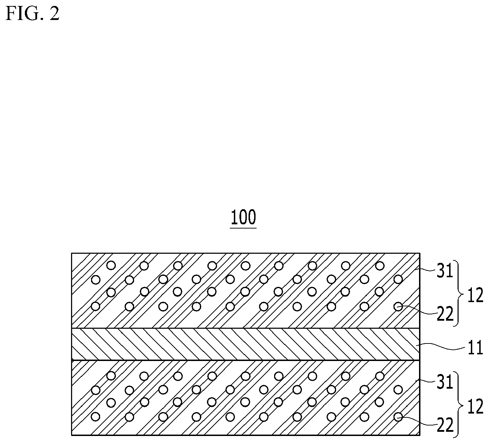

FIG. 2 schematically shows a negative electrode for a lithium secondary battery according to another exemplary embodiment.

Referring to FIG. 2, the negative electrode 100 for lithium secondary battery according to another exemplary embodiment comprises current collector 11, and a negative active material layer 12 positioned on at least one side of the current collector 11 and comprising a lithium metal layer 31.

In this case, the negative active material layer 12 comprising the lithium metal layer 31 is a lithium metal layer 31 comprising a metal seed 22 therein.

The metal seed 22 may be, for example, at least one selected from the group consisting of magnesium, silver, zinc, platinum, tin, silicon, aluminum, sodium, potassium, gold, bismuth, indium and germanium, but is not limited thereto.

In the present exemplary embodiment, the negative active material layer 12 is in the form of a lithium metal layer 31 comprising a metal seed 22 . When forming the negative active material layer in the form of the lithium metal layer 31 comprising the metal seed 22 as described above, because the nucleation free energy may be lowered at the initial stage of nucleation of lithium particles in the electrodeposition process, a lithium metal layer having a coarse particle structure may be formed even under high current and overvoltage conditions.

In the present exemplary embodiment, the thickness of the negative active material layer may range from 1 *µ*m to 100 *µ*m, more specifically, from 5 *µ*m to 30 *µ*m. In the present exemplary embodiment, when the negative active material layer 12 satisfies the thickness range, it has the merit of not only maximizing the energy density of the battery while improving the charge and discharge cycle-life of the battery, but also minimizing the time and cost of the electrodeposition process when forming the negative active material layer.

In the present exemplary embodiment, the metal seed comprised in the lithium metal layer may be in the form of alloying with lithium in the lithium metal layer.

In this way, when a negative active material layer, that is, a metal seed alloyed with lithium is comprised in the lithium metal layer, the alloy may be easily alloyed with lithium ion when it is recharged by reversibly changing it to the form of a metal seed during the discharge process. In other words, since the role of the seed may be repeated during the charging and discharging process, it has the merit of improving the battery cycle-life by preventing the dendrite formation of resultantly lithium.

On the other hand, although not shown in FIG. 2, the negative active material layer of the present exemplary embodiment may further comprise a film positioned on the surface of the negative active material layer.

This film is the same as that described for the negative electrode for a lithium secondary battery according to an exemplary embodiment described above, and will be omitted here.

The method for manufacturing of a lithium secondary battery according to an exemplary embodiment, comprises forming a coating layer on at least one surface of a current collector using a coating composition comprising a metal seed, positioning the current collector on which the coating layer is formed in a plating solution and then positioning a lithium source at a predetermined distance from the coating layer and forming a lithium metal layer by applying a current between the current collector and the lithium source.

First, a step of forming a coating layer on at least one surface of the current collector is performed using a coating composition comprising a metal seed.

In this case, the metal seed, for example, may be one or more selected from the group consisting of magnesium, silver, zinc, platinum, tin, silicon, aluminum, sodium, potassium, gold, bismuth, indium and germanium, but is not limited thereto.

In addition, the coating layer may be performed using at least one method of, for example, sputtering, electrolytic and electroless plating, electron beam and thermal vapor deposition.

Meanwhile, in the step of forming the coating layer, the thickness of the coating layer formed on at least one surface of the current collector may be 0.01 *µ*m to 10 *µ*m, more specifically, 100 nm to 500 nm range.

If the coating layer thickness satisfies the range, it may be manufactured to have a structure of a negative electrode for a lithium secondary battery according to an exemplary embodiment, more specifically, of negative electrode 100 for lithium secondary battery as shown in FIG. 1.

Therefore, in the subsequent process after the coating layer forming step, the step of forming of the lithium metal layer may be performed to form a layer of negative active material having a plurality of layers by performing so that the lithium metal layer is positioned on the coating layer formed on at least one side of the current collector.

Alternatively, in the step of forming the coating layer, the thickness of the coating layer formed on at least one surface of the current collector may be in the range of 10nm to 100nm.

When the coating layer thickness satisfies the range, it may be manufactured to have a structure of a negative electrode for a lithium secondary battery according to another exemplary embodiment, more specifically, a structure of a negative electrode 100 for a lithium secondary battery as shown in FIG. 2.

Therefore, in the subsequent process after the coating layer forming step, the forming of the lithium metal layer is, it may be carried out to so that a metal seed comprised in the coating layer formed on at least one surface of the current collector is alloyed with lithium inside the lithium metal layer and diffused therein to form a single negative active material layer.

On the other hand, after the step of forming the coating layer, positioning the current collector on which the coating layer is formed in a plating solution and then positioning a lithium source at a predetermined distance from the coating layer, and forming a lithium metal layer by applying a current between the current collector and the lithium source are performed.

The step of forming the lithium metal layer will be described in more detail with reference to FIG. 1.

First, the current collector 11 on which the coating layer 20 is formed is positioned in a plating solution 40 and then a lithium source 30 is positioned at a predetermined distance from the coating layer 20.

The lithium source 30, for example, lithium metal, lithium alloy, a foil in which the lithium metal or lithium alloy is pressed into a current collector, a plating solution in which lithium salt is dissolved, or the like may be used.

The current collector 11 is the same as the one described above, and will be omitted here.

The plating solution 40 may be prepared by dissolving lithium salt in a non-aqueous solvent.

More specifically, the lithium salt may be LiCl, LiBr, LiI, LiC03, LiN03, LiFSI, LiTFSI, LiBF₄, LiPF₆, LiAsF₆, LiClO₄, LiN(SO₂CF₃)₂, LiBOB, or combination thereof. The concentration of the lithium salt may be 0.1 to 3.0M based on the entire electrolyte solution.

More specifically, in the present exemplary embodiment, the plating solution is characterized in that it comprises a nitrogen-based compound as at least one of the lithium salt and the non-aqueous solvent.

The nitrogen-based compound may be comprise, for example, at least one selected from the group consisting of Lithium nitrate, Lithium bis fluorosulfonyl imide, Lithium bis trifluoromethane sulfonimide, e-Caprolactam, N-methyl-e-caprolactam, Triethylamine and Tributylamin.

Among the nitrogen-based compounds, at least one of lithium nitrate, lithium bis fluorosulfonyl imide, and lithium bis trifluoromethane sulfonimide may be used as a lithium salt.

Among the nitrogen-based compounds, at least one of Caprolactam (e-caprolactam), methyl caprolactam (N-methyl-e-caprolactam), triethylamine and tributylamine may be used as the non-aqueous solvent.

Meanwhile, in the plating solution, a general non-aqueous solvent may be added as a solvent in consideration of the plating solution's viscosity. This is because, if the viscosity of the plating solution is too high, the lithium ion mobility is deteriorated and the ion conductivity of the plating solution is deteriorated, so the time required for the electrodeposition process is increased and the productivity is reduced.

The solvent, for example, may comprise at least one selected from the group consisting of ethylene carbonate, propylene carbonate, dimethyl carbonate, ethyl methyl carbonate, diethyl carbonate, 1,2-dimethoxyethane, diethylene glycol dimethyl ether, tetraethylene glycol dimethyl ether, tetrahydrofuran, 1,3-dioxolane, 1,4-dioxane and 1,3,5-trioxane.

The current density of the applied current in the step of forming a lithium metal layer on at least one surface of the current collector by applying the current may be 0.1mA/cm² to 100mA/cm² range, more specifically 0.2mA/cm² to 50mA/cm² range, 5mA/cm² to 30mA/cm² range or 7mA/cm² to 25mA/cm² range.

In addition, the time for applying the current may be in the range of 0.05 hours to 50 hours, more specifically, in the range of 0.25 hours to 25 hours.

As such, in the present exemplary embodiment, a negative electrode in which a negative active material layer comprising a lithium metal layer having a coarse particle structure is formed may be manufactured by preventing the excessive generation of fine lithium particles even under high current conditions and inducing the initially generated lithium particles to grow well. In addition, the negative active material layer prepared in this way has excellent surface uniformity. Therefore, when the negative electrode manufactured according to the present exemplary embodiment is applied, the charging and discharge characteristics of the lithium secondary battery may be significantly improved.

A lithium secondary battery according to an exemplary embodiment comprises a positive electrode, a negative electrode, and an electrolyte positioned between the positive electrode and the negative electrode.

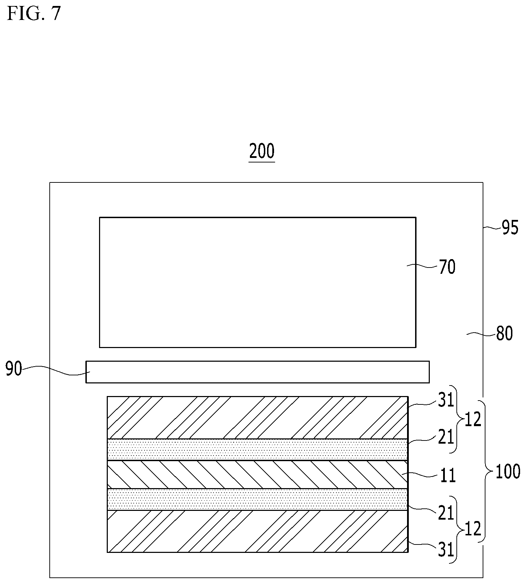

FIG. 7 schematically shows the structure of a lithium secondary battery according to an exemplary embodiment.

Referring to FIG. 7, the lithium secondary battery 200 of the present exemplary embodiment may comprise an electrode assembly comprising a positive electrode 70, a negative electrode 100, and a separator 90 disposed between the positive electrode 70 and the negative electrode 100.

This electrode assembly is wound or folded and accommodated in the cell vessel 95.

After that, electrolyte 80 is injected into the battery container 95 and sealed, so that the lithium secondary battery 200 may be completed. In this case, the battery container 95 may have a cylindrical shape, a prismatic shape, a pouch-type, a coin-type, or the like.

In FIG. 7, the negative electrode according to an exemplary embodiment is shown as the negative electrode 100 for convenience, but as the negative electrode, all of the negative electrodes for lithium secondary batteries according to the above-described exemplary embodiments may be applied.

The positive electrode 70 may comprise a positive electrode active material layer and an negative electrode current collector.

The positive active material layer may comprise, at least one metal among Ni, Co, Mn, Al, Cr, Fe, Mg, Sr, V, La and Ce, and a Li compound comprising at least one non-metal element selected from the group consisting of O, F, S, P, and combination thereof. The positive active material layer may comprise active material particles having a size of approximately 0.01 *µ*m to 200 *µ*m, and may be appropriately selected according to the required characteristics of the battery.

In some cases, a conductive material may be added to the positive active material layer.

The conductive material may be, for example, carbon black and ultrafine graphite particles, fine carbon such as acetylene black, nano metal particle paste, etc., but is not limited thereto.

The positive electrode current collector serves to support the positive active material layer. As the positive electrode current collector, for example, aluminum thin plate (Foil), nickel thin plate or combination thereof may be used, but is not limited thereto.

As electrolyte 80 charged in the lithium secondary battery 200, a non-aqueous electrolyte solution or a solid electrolyte may be used.

The non-aqueous electrolyte solution may comprise, for example, a lithium salt such as lithium hexafluoro phosphate and lithium perchlorate, and a solvent such as ethylene carbonate, propylene carbonate, butylene carbonate. In addition, as the solid electrolyte, for example, a gel polymer electrolyte obtained by impregnation of an electrolyte solution with a polymer electrolyte such as polyethylene oxide or polyacryllonitrile, or an inorganic solid electrolyte such as LiI or Li₃N may be used.

The separator 90 separates the positive and negative electrodes and provides a passage for lithium ions to move, and any one commonly used in lithium secondary batteries may be used. That is, one that has low resistance to ion movement of the electrolyte and excellent moisture content of the electrolyte solution may be used. The separator, for example, may be selected from glass fiber, polyester, polyethylene, polypropylene, polytetrafluoroethylene or combination thereof, and may be in the form of a non-woven fabric or woven fabric. On the other hand, when a solid electrolyte is used as the electrolyte 80, the solid electrolyte may also serve as the separator 90.

Hereinafter, an embodiment of the present invention will be described in detail. However, this is provided as an example, and the present invention is not limited thereto, and the present invention is only defined by the scope of claims to be described later.

### (Example 1)

A negative electrode for a lithium secondary battery according to Example 1 was manufactured by the same process as in FIG. 1.

First, a coating layer 20 comprising magnesium was formed to a thickness of about 250 nm on one surface of a copper current collector 11 having a thickness of 10 *µ*m by using the sputtering method.

After positioning the current collector 11 on which the coating layer 20 comprising magnesium is formed in the plating solution 40 as described above, the lithium source 30 is positioned at a predetermined distance from the coating layer.

The plating solution was 40 wt% and 10 wt% of lithium bis(fluorosulfonyl)imide (LiFSI) and lithium nitrate (Lithium nitrate), respectively, based on 100 wt% of the plating solution, Fluoroethylene carbonate (FEC), a fluorine-based compound, was prepared by adding about 19 wt% based on 100 wt% of the plating solution.

In addition, as the lithium source 20, a lithium metal plate having a purity of 99.9% or more and having a thickness of 500 µm was used by pressing it on a copper current collector plate (Cu Plate).

After stacking the lithium source 30 and the current collector 11 in an electrically insulated state in the plating solution 40, a lithium metal layer 31 positioned on the coating layer 21 is formed by using a power supply device to apply a current using the lithium source 30 and the current collector 11 as (+) and (-) electrodes, respectively.

At this time, the average current density of the process was 8 mA/cm² and the process time was about 0.6 hours to prepare a negative electrode 100 in which a negative active material layer 12 having a thickness of about 20 *µ*m was formed.

### (Comparative Example 1)

A negative electrode with a negative active material layer was manufactured by the same method as in Example 1, except that a copper current collector with a thickness of 10 *µ*m was used without a separate coating instead of a current collector on which a coating layer comprising magnesium was formed.

### (Experimental Example 1)

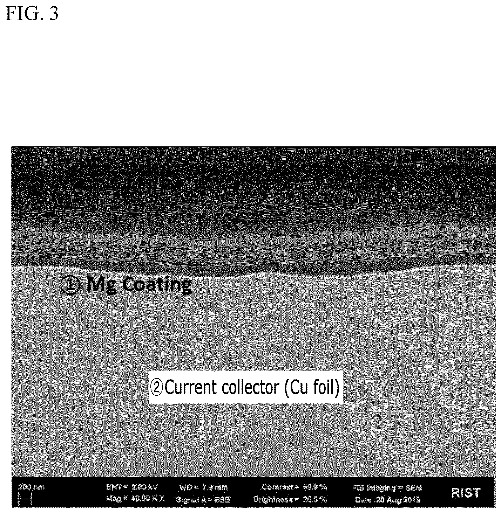

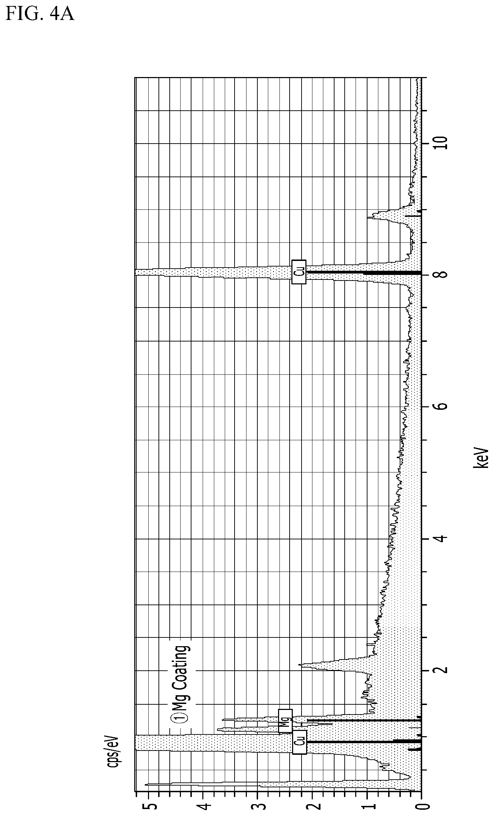

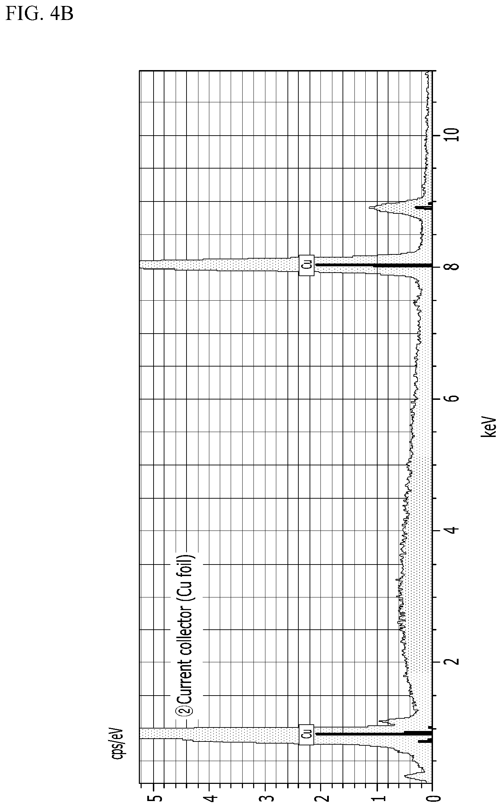

In Example 1, the cross-sectional structure and components of the current collector on which the coating layer was formed were measured, and the results are shown in FIGS. 3 and 4a and 4b.

That is, FIG. 3 is an SEM photograph of a cross section of the current collector on which the coating layer is formed, and FIGS. 4a and 4b show the component analysis results for the current collector on which the coating layer is formed.

Component analysis was performed by Energy Dispersive X-ray Spectroscopy by processing a cross section with a focused ion beam.

Referring to FIGS. 3, 4a, and 4b , it may be seen that the magnesium coating layer is uniformly formed on the surface of the current collector.

### (Experimental Example 2)

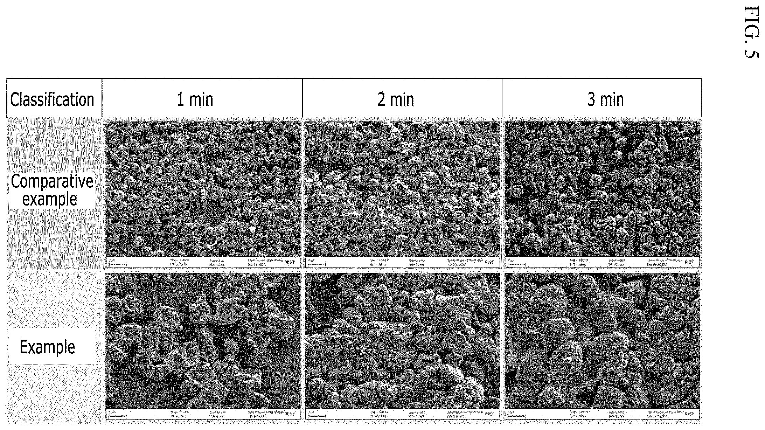

The negative active material layer was formed by the same method as in Example 1 and Comparative Example 1, but the electrodeposition process time was shortened to 1 minute, 2 minutes, and 3 minutes to measure the surface microstructure of the negative active material layer formed in the initial stage of the electrodeposition process. The microstructure was measured by scanning electron microscopy by processing a cross section with a focused ion beam, and the results are shown in FIG. 5.

This is to confirm the microstructure of lithium particles in the initial stage of the electrodeposition process.

Referring to FIG. 5, it may be seen that the behavior of nucleation and particle growth of the initial lithium particles is significantly different even within a very short time in the initial stage of the electrodeposition process.

That is, when the negative active material layer comprising the lithium metal layer is formed on the current collector under high current conditions without a coating layer as in Comparative Example 1, it may be confirmed that fine particles are excessively generated over the entire surface of the negative active material layer. Although the particles grow slowly over time, the particle size is relatively small even after growth.

On the other hand, in the case of manufacturing a negative active material layer by forming a lithium metal layer on the coating layer after forming a coating layer comprising magnesium as in Example 1, it may be seen that although the number of generated particles is small, lithium grows large even in a short time and has a coarse particle structure.

Therefore, when preparing the negative active material layer to comprise a metal seed that is easy to alloy with lithium when performing the electrodeposition process for forming the negative active material layer as in this Example, even in a high-speed electrodeposition process in which a high current must be applied from the beginning, excessive nucleation is prevented, thereby preventing an increase in the specific surface area of the negative active material.

Accordingly, it is possible to reduce side reactions with the electrolyte during charging and discharging of the lithium secondary battery, and as a result, it is possible to significantly increase the charging and discharging characteristics.

### (Experimental Example 3)

A lithium secondary battery (2032 type coin full cell) having the structure as shown in FIG. 7 was manufactured using the negative electrode for a lithium secondary battery manufactured according to Example 1 and Comparative Example 1, and then the charge/discharge characteristics were evaluated.

Specifically, the positive electrode was manufactured so that the positive active material layer was laminated on one side of the current collector (Al foil) using a positive active material slurry comprising LiCoO₂ (99 wt%) active material, conductive material and binder. At this time, the capacity per unit area of the positive electrode was prepared at 3.1 mAh/cm², which is the positive electrode capacity level of the currently commercially available lithium secondary battery (using graphite negative electrode).

As the electrolyte solution, a mixed solvent (3:7 volume ratio) of ethylene carbonate and ethyl methyl carbonate in which 1M LiPF₆ is dissolved was used.

Celgard's Model 2400 made of polypropylene was used for the separator, and Hohsen's 2032 type coin cell product was used for the battery container.

The charging/discharging performance evaluation of the lithium secondary battery prepared by the above method was performed as follows.

In the charging step, after charging with a constant current at 0.2C to 4.25V, charging at a constant potential from 4.25V to 0.05C, and in the discharging step at 0.5C with a constant current to 3.0V.

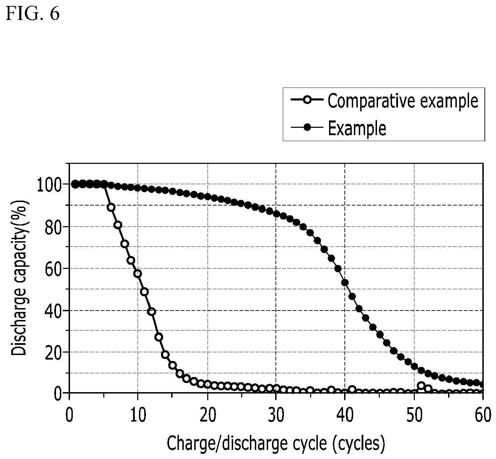

The results of evaluating the charging and discharging performance of lithium secondary batteries are shown in FIG. 6 and Table 1 below.

**(Table 1)**

| Classification | Charge and discharge cycle-life (cycle) |
|---|---|
| Comparative Example 1 | 6 |
| Example 1 | 33 |

Referring FIG. 6 and Table 1, it may be confirmed that the lithium secondary battery to which a negative electrode for a lithium secondary battery manufactured according to Example 1 is applied has significantly superior charge and discharge cycle-life compared to a lithium secondary battery to which a negative electrode for a lithium secondary battery manufactured according to Comparative Example 1 is applied.

As in the present exemplary embodiment, by applying a negative electrode formed with a negative active material layer comprising a metal seed, the surface area of the negative electrode in contact with the electrolyte solution is reduced, thereby reducing the side reaction between the negative electrode surface and the electrolyte solution during the charging and discharging process, it is thought that this is because the film on the surface of the negative active material layer formed in the electrodeposition process acts as a protective layer.

Therefore, in the case of manufacturing a negative electrode by the same method as the present exemplary embodiment, it may be confirmed that the negative active material layer may be formed at high speed without deterioration of the performance of the negative active material layer formed even when the electrodeposition process is performed under a high current condition. Accordingly, it is possible to secure commercially available and manufacturing competitiveness in the manufacture of a negative electrode in which a negative active material layer comprising a lithium metal layer is formed.

The present invention is not limited to the exemplary embodiments, but may be manufactured in a variety of different forms, and a person of an ordinary skill in the technical field to which the present invention belongs is without changing the technical idea or essential features of the present invention It will be understood that the invention may be embodied in other specific forms. Therefore, it should be understood that the exemplary embodiments described above are exemplary in all respects and not restrictive.

## Claims

1. A negative electrode for a lithium secondary battery, comprising:
a current collector; and
a negative active material layer positioned on at least one surface of the current collector, and comprising a lithium metal layer;
wherein the negative active material layer comprising the lithium metal layer, comprises
a coating layer positioned on the current collector and comprising a metal seed, and
a lithium metal layer positioned on the coating layer.

2. The negative electrode for a lithium secondary battery of claim 1, wherein:
the metal seed is at least one selected from the group consisting of magnesium, silver, zinc, platinum, tin, silicon, aluminum, sodium, potassium, gold, bismuth, indium and germanium.

3. The negative electrode for a lithium secondary battery of claim 1, wherein:
the thickness of the coating layer is 0.01*µ*m to 10*µ*m.

4. The negative electrode for a lithium secondary battery of claim 1, wherein:
the thickness of the negative active material layer is 1*µ*m to 100*µ*m.

5. The negative electrode for a lithium secondary battery of claim 1, wherein:
the negative active material layer further comprises
a film positioned on a surface of the negative active material layer,
wherein the film comprises at least one material selected from the group consisting of a Li-N-C-H-O-based ionic compound, a Li-P-C-H-O-based ionic compound, and LiF.

6. A negative electrode for a lithium secondary battery, comprising:
a current collector; and
a negative active material layer positioned on at least one surface of the current collector, and comprising a lithium metal layer;
wherein the negative active material layer comprising the lithium metal layer, comprises
a metal seed therein.

7. The negative electrode for a lithium secondary battery of claim 6, wherein:
the metal seed is at least one selected from the group consisting of magnesium, silver, zinc, platinum, tin, silicon, aluminum, sodium, potassium, gold, bismuth, indium and germanium.

8. The negative electrode for a lithium secondary battery of claim 6, wherein:
the thickness of the negative active material layer is 1*µ*m to 100*µ*m.

9. The negative electrode for a lithium secondary battery of claim 6, wherein:
the metal seed comprised in the lithium metal layer is
alloyed with lithium inside the lithium metal layer.

10. The negative electrode for a lithium secondary battery of claim 6, wherein:
the negative active material layer further comprises
a film positioned on a surface of the negative active material layer,
wherein the film comprises at least one material selected from the group consisting of a Li-N-C-H-O-based ionic compound, a Li-P-C-H-O-based ionic compound, and LiF.

11. A method for manufacturing a negative electrode for a lithium secondary battery, comprising:
forming a coating layer on at least one surface of a current collector using a coating composition comprising a metal seed;
positioning the current collector on which the coating layer is formed in a plating solution and then positioning a lithium source at a predetermined distance from the coating layer; and
forming a lithium metal layer by applying a current between the current collector and the lithium source;
wherein
the metal seed is at least one selected from the group consisting of magnesium, silver, zinc, platinum, tin, silicon, aluminum, sodium, potassium, gold, bismuth, indium and germanium.

12. The method of claim 11, wherein:
in the step of forming a coating layer,
the thickness of the coating layer formed on at least one surface of the current collector is in the range of 100 nm to 10 *µ*m.

13. The method of claim 12, wherein:
the step of the forming a lithium metal layer
is performed to form a negative active material layer having a plurality of layers by being performed so that the lithium metal layer is positioned on the coating layer formed on at least one surface of the current collector.

14. The method of claim 11, wherein:
in the step of forming a coating layer,
the thickness of the coating layer formed on at least one surface of the current collector is in the range of 10 nm to 100 nm.

15. The method of claim 14, wherein:
the step of the forming a lithium metal layer
is performed to form a single negative active material layer by alloying the metal seed comprised in the coating layer formed on at least one surface of the current collector with lithium in the lithium metal layer and diffusing into the inside.

16. The method of claim 11, wherein:
the current density of the current applied in the step of forming a lithium metal layer on at least one surface of the current collector by applying a current the current is in the range of 0.1mA/cm² to 100mA/cm².

17. The method of claim 16, wherein:
the time for applying the current the current in the step of forming a lithium metal layer on at least one surface of the current collector by applying a current the current is in the range of 0.05 hours to 50 hours.

18. The method of claim 11, wherein:
the step of forming a coating layer on at least one surface of a current collector using a coating composition comprising a metal seed
is performed using at least one method of sputtering, electrolytic and electroless plating, electron beam, and thermal vapor deposition.

19. A lithium secondary battery comprising:
a negative electrode;
a positive electrode; and
an electrolyte;
wherein the negative electrode is the negative electrode for a lithium secondary battery according to any one of claims 1 to 10.
